# EUROPEAN PATENT SPECIFICATION

(11) **EP 3 149 238 B1**
(45) Date of publication and mention of the grant of the patent: **13.06.2018**
(21) Application number: 14824023.7
(22) Date of filing: 30.12.2014
(51) Int. Cl.: D06F 58/28, D06F 58/02

(54) **IMPROVEMENTS IN AND RELATING TO TUMBLE DRYERS**
VERBESSERUNGEN AN UND IM ZUSAMMENHANG MIT WÄSCHETROCKNERN
AMÉLIORATIONS DANS ET PAR RAPPORT À DES SÉCHOIRS PAR CULBUTAGE

(30) Priority: 30.05.2014 GB 201409596
(43) Date of publication of application: 05.04.2017
(73) Proprietor: DBK David + Baader GmbH, Nordring 26 76761 Rülzheim (DE)
(72) Inventor: LEWIS, Michael, Caldicot NP26 4QH (GB); ROBINSON, Mark, Gilfach Goch RCT CF39 8TU (GB); JAYNE, Jonathan, Llantrisant CF72 8DY (GB); BEESLEY, Cliffordd Keith, Porthcawl CF36 5BP (GB); HOPKIN, Ian David, Aberthin Cowbridge CF71 7HE (GB)
(74) Representative: Winter, Brandl, Fürniss, Hübner, Röss, Kaiser, Polte - Partnerschaft mbB
(86) International application number: PCT/EP2014/079420
(87) International publication number: WO 2015/180805

(56) References cited:
- EP-A1- 2 116 647
- EP-A2- 2 498 036
- DE-A1- 3 407 439

## Description

This invention relates to tumble dryers of the type which circulate heated air within a rotatable drum for the purpose of drying wet or damp clothing.

Domestic tumble dryers fall into two main categories in terms of the manner of their operation, the first being by a venting method where dry, hot air is blown over wet clothing and moisture picked up by the air is then continuously exhausted through a hose until a given time has elapsed by which it is presumed that the clothing is dry, such as by the use of a programmable timer at the start of the drying process. This method has a number of disadvantages, of which the most obvious is the inherent unpredictability of the drying process for various types of fabric and although the humidity of exhaust air can be constantly monitored to provide an alarm when a continuous period of time has elapsed whereby the exhaust air is deemed to be sufficiently dry, in practice a guess is made beforehand based on the anticipated time the drying cycle will take. This can result in unnecessarily long drying times, or a drying time that is too short, meaning that the tumble dryer has to be re-started if, on inspection, it is found that the contents are not sufficiently dry. A more subtle disadvantage, however, is that as a constant stream of hot air is blown over clothing that is progressively drying the efficiency of drying becomes progressively less and a great deal of thermal energy is lost as a result.

The foregoing disadvantage of the venting method of clothes drying is obviated to a large extent with regard to the condenser method of clothes drying which involves the recirculation of air within a sealed system, the air being heated before passing through the rotating drum where it becomes saturated as it is blown over the wet fabric, to then flow between the fins of a condenser unit with which it exchanges heat. This cools the saturated air to the extent that the moisture in it condenses in the condenser unit and is collected in a reservoir while the, now cooled, air is recirculated to continue the cycle. The condenser unit itself is typically cooled by a separate flow of ambient air which is continuously exhausted and hence vented from the system. Such a closed feedback system is more efficient than the venting method because the circulating hot air is continually blown over the wet clothing which therefore allows more moisture to be absorbed by the air until it eventually becomes saturated. A further advantage is that it requires less energy to maintain the required air temperature in such a closed system as compared to the continual heating of new incoming air as used with venting tumble dryers. However, as will be apparent, using warm, relatively humid air to dry wet or damp fabric is less effective than using warm, relatively dry ambient air as used with a vented tumble dryer, and the present invention is derived from the realisation that there is a need for a different approach which combines the benefits of each type of drying which increases the energy efficiency and reduces the time taken to dry clothing.

In GB2094963 a tumble dryer suitable for use in a commercial or domestic laundry is described in which ventilation ducts are provided to selectively recirculate air or exhaust air depending upon the relative humidity of the air being circulated within the tumble dryer. Remote from the exhaust duct of the tumble dryer drum is an air distribution chamber through which air is either recirculated to the drum or vented to ambient.

In EP2116647 it is noted that the measurement of relative humidity within such a closed circuit has proven to be very inaccurate such that hygrometer readings may have significant deviations and that, although very accurate hygrometers are theoretically available, they are so expensive that they cannot be reasonably used in a laundry dryer. Instead, it is proposed that a portion of the air being recirculated is exchanged for an equal quantity of unheated ambient air for a preferred number of times, the stated advantage being that the heater is turned off when the air exchange occurs, thereby reducing energy consumption. However, it will be understood that a disadvantage of this arrangement is that it requires a determination as to what the optimum preferred number of times for partially exchanging recirculating air with ambient air is for each given load of laundry being dried.

The present invention is derived from the realisation that there is a need for better control and management of warm, humid air as it is being recirculated and/or vented within or from a tumble dryer drum when drying clothing.

According to a first aspect of the invention there is provided a tumble dryer including means for sensing ambient air humidity and temperature, air heater means, air circulation means to move air heated by the heater means through the interior of the tumble dryer drum in a ducted circuit and means to selectively vent the air to ambient, upstream of the drum air temperature sensor means, downstream of the drum air temperature and pressure sensor means, and means for thereafter using the upstream temperature and downstream temperature and pressure sensed to predict the saturation of the air exiting the tumble dryer drum to thereafter selectively switch from air recirculation to air venting mode when a preselected level of saturation has been reached.

Advantageously, the air pressure sensed immediately downstream of the tumble dryer drum is averaged over time so as to prevent fluctuations in readings due to e.g. damp or wet clothes within the drum shifting during rotation thereof and thereby causing erroneous readings.

Preferably, in order to minimise thermal losses from the tumble dryer drum between the air inlet and air outlet, which could adversely affect the accuracy of the air saturation determination, the drum is thermally insulated.

Conveniently, during the drying cycle when in air recirculation mode the air heater power is reduced or otherwise adjusted so that the temperature of the air exiting the tumble dryer drum remains relatively constant, thereby avoiding the temperature of air within the drum from reaching excessive levels.

With this arrangement the tumble dryer is continuously switched from recirculation mode to exhaust mode every time a chosen maximum saturation point of the air in the drum has been reached, which may be as short as about every five seconds, thereby ensuring that energy that would otherwise be used to circulate hot saturated air over the clothing is not wasted.

The relative humidity of the air being circulated can therefore be calculated with reference to standard look-up tables providing the saturation pressure and this information can be used in conjunction with saturated water temperature look-up tables to collectively calculate the specific humidity of the air as it leaves the drum. The resulting calculation can then be used as a reference point by which actual sensed humidity is compared such that if the circulating air is not sufficiently saturated it will continue to be circulated, but as it approaches or reaches the calculated theoretical maximum saturation point the tumble dryer is then switched to vented mode such that the saturated air is expelled from the tumble dryer drum and fresh, ambient, air is drawn into it for subsequent recirculation within the tumble dryer.

Conveniently, the air-heater means is adjustable via a central processing unit (CPU) to bring the actual air temperature close to a predetermined control value to thereby minimise energy wastage as well as avoiding damage caused by the circulating air becoming too hot and hence being capable of causing damage to e.g. clothing that is circulating within the tumble dryer drum.

Conveniently, the air circulation means includes a pair of gate flaps and associated air inlet and air outlet ducts operable by a CPU in response to temperature and/or humidity sensors indicating that a maximum saturation point of air within the drum has been reached, or after a given period of time has elapsed.

Conveniently, the tumble dryer includes a first fan and first electric heater adjacent the inlet end of the drum and a second fan and second electric heater remote from the drum and immediately downstream of the air inlet valve means to thereby heat incoming ambient air as required or maintain the temperature within the duct and drum as required.

According to a second aspect of the invention there is provided a method of drying clothes in a tumble dryer including the steps, in any suitable order, of sensing ambient air humidity and temperature, providing air heater means and air circulation means to move air heated by the heater means through the interior of the tumble dryer drum in a circuit and to selectively vent the air to ambient, upstream of the drum providing air temperature sensor means, downstream of the drum providing air temperature and pressure sensor means, and means for thereafter using the upstream temperature and downstream temperature and pressure sensed to predict the saturation of the air exiting the tumble dryer drum to thereafter selectively switch from air recirculation to air venting mode when a preselected level of saturation has been reached.

The invention will now be described, by way of example only, with reference to the attached drawings in which:
Figure 1 is a schematic arrangement showing the circulation of hot air within a tumble dryer according to the invention, and
Figure 2 is a schematic arrangement corresponding to Figure 1 showing the tumble dryer in its air exhaust and air replenishment mode.

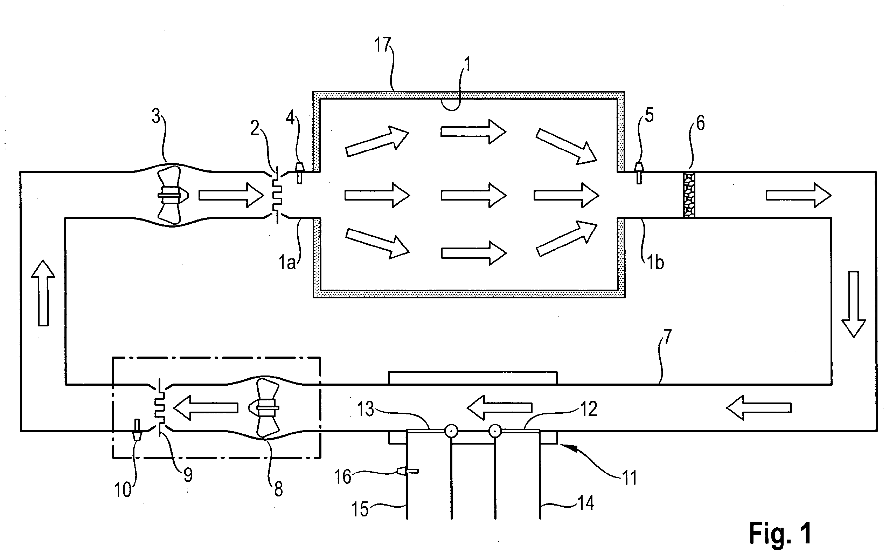

In the arrangement shown with reference to Figure 1, a rotatable tumble dryer drum 1 has a hot air upstream inlet end 1a supplied with hot air via a first electric heater 2 supplied with forced air in the direction arrowed by a first fan 3, the temperature of the air being monitored by a thermometer 4 immediately downstream of the heater 2. At the other, downstream, end of the drum 1 is an air outlet 1b and a temperature and pressure sensor 5 upstream of a filter 6 for filtering lint etc. exiting the tumble dryer drum 1. The air outlet 1b is connected to the air inlet 1a by a recirculation duct 7 remote from the drum 1 which includes a second fan 8 and associated second heater 9 which together assist in preventing moisture condensation within the ducting 7, assisted by a second temperature sensor 10.

Upstream of the second fan 8 is air valve means 11 in the form of gate flaps 12, 13 which, respectively, close internal air exhaust duct 14 and ambient air inlet duct 15. At the air inlet duct is an ambient humidity and temperature sensor 16.

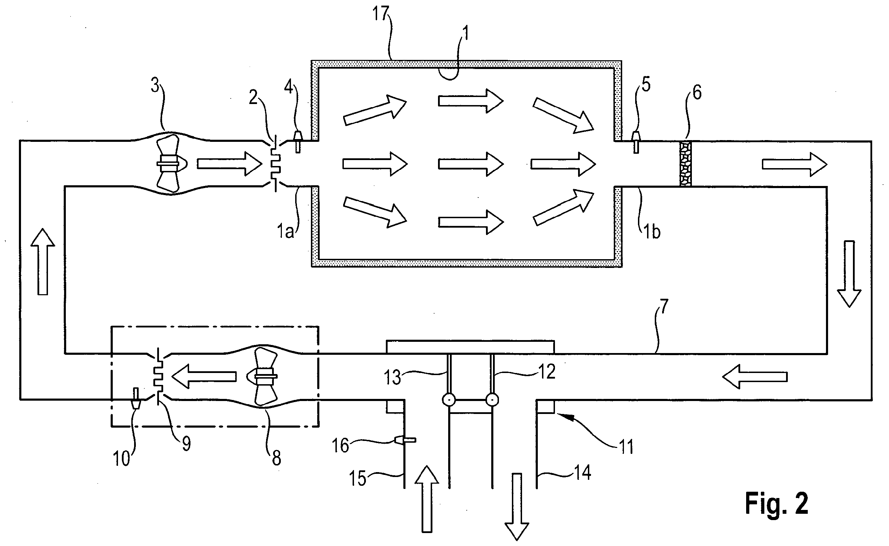

The gate flaps 12, 13 are switchable from the position shown in Figure 1, where hot air is continually circulated around the duct 7 and through the interior of the tumble dryer drum 1, to the position shown in Figure 2 where, in this mode, ambient air is drawn into inlet duct 15 and warm, humid, air is flushed from the tumble dryer drum 1 and duct 7 via the exhaust duct 14.

In operation and referring firstly to Figure 1, which shows a closed re-circulation system, hot air, shown arrowed, is continually recirculated around the duct 7 and through the drum 1 until the sensed humidity indicates saturation point has been reached, such sensing and monitoring being maintained by a central processing unit (not shown), although it will be understood that a pre-set time may instead be selected to indicate when saturation of the hot air has reached a point where further re-circulation of it is wasteful of energy. In either case the valve means 11 adjusts to the position shown in Figure 2 where the exhaust gate flap 12 has opened to allow the escape of warm, moist air from the duct 7 through the exhaust duct 14 whilst preventing any further flow of warm air downstream towards the second fan 8. At the same time the ambient air inlet gate flap 13 has been opened to allow air to enter the inlet duct 15 whereafter fresh, ambient, air of relatively low humidity is able to flush away the hot, moist air previously recirculating through the duct 7 and tumble dryer drum 1. After a given period, or when a sensed, lower, humidity level is reached the valve means 11 can be reset to the configuration shown in the Figure 1, whereafter the previous cycle continues until an indication has been reached that the level of humidity within the tumble dryer is no longer falling, indicating that clothes in the drum 1 are dry, or after a given time period has elapsed. In either case, it will be apparent that this, effectively hybrid, system has the benefit of using less energy when in the closed re-circulation mode shown in Figure 1 as compared to the conventional venting method of simply heating ambient air and blowing it over damp or wet clothes to thereafter be vented to atmosphere in a continuous open cycle.

The humidity of the air being circulated can be calculated with reference to standard look-up tables providing the saturation pressure and this information can be used in conjunction with saturated water temperature look-up tables to collectively calculate the humidity of the air as it leaves the drum 1. The resulting calculation can then be used as a reference point by which actual or sensed humidity at that point is compared with ambient humidity such that if the circulating air is not sufficiently saturated it will continue to be recirculated, but as it approaches or reaches the calculated or measured theoretical maximum saturation point the tumble dryer is then switched to vented mode such that the saturated air is expelled from the tumble dryer drum and associated ducting and fresh, ambient, air is drawn in for subsequent recirculation with the tumble dryer. With this arrangement the tumble dryer can be switched from recirculation mode to vented mode at the optimum time and as the condition of the clothes within the drum 1 changes during the drying process the heater power can be adjusted, such as by reducing the voltage across the heater 2 or by selective switching of the heater element on or off, to thereby adjust the temperature of air entering the drum 1 so that it does not exceed a required set value in recirculation mode. Hence, the invention therefore provides very close control over the amount of energy being used during the drying process and the time when venting occurs such that the tumble dyer is being vented much more rapidly than would otherwise be the case, leading to shorter drying times and consequent energy savings.

### List of References

- 1: dryer drum
- 1a: inlet end
- 1b: air outlet
- 2: first electric heater
- 3: first fan
- 4: thermometer
- 5: temperature and pressure sensor
- 6: filter
- 7: recirculation duck
- 8: second fan
- 9: second heater
- 10: second temperature sensor
- 11: air valve means
- 12: gate flap
- 13: gate flap
- 14: air exhaust duct
- 15: air inlet duct
- 16: humidity and temperature sensor
- 17: insulation

## Claims

1. A tumble dryer including air heater means (2,9), air circulation means (3,8) to move air heated by the heater means through the interior of a drum (1) of the tumble dryer in a ducted (7) circuit and means (12,13) to selectively vent the air to ambient, **characterized by** means (16) for sensing ambient air humidity and temperature, upstream of the drum air temperature sensor means (4), downstream of the drum air temperature and pressure sensor means (5), and means for using the upstream temperature and downstream temperature and pressure sensed to predict the saturation of the air exiting the tumble dryer drum to thereafter selectively switch from air recirculation to air venting mode when a preselected level of saturation has been reached.

2. A tumble dryer according to claim 1 FURTHER **CHARACTERISED IN THAT** the air pressure measurement immediately downstream of the tumble dryer drum (1) is averaged over time so as to prevent fluctuations in readings due to e.g. damp or wet clothes within the drum shifting during rotation thereof and thereby causing erroneous readings.

3. A tumble dryer according to claim 1 or claim 2 FURTHER **CHARACTERISED IN THAT** the drum is thermally insulated (17).

4. A tumble dryer according to any preceding claim FURTHER **CHARACTERISED IN THAT** during the drying cycle when in air recirculation mode the air heater power is reduced or otherwise adjusted so that the temperature of the air exiting the tumble dryer drum (1) remains relatively constant, thereby avoiding the temperature of air within the drum from reaching excessive levels as the air becomes less saturated with water.

5. A tumble dryer according to any preceding claim FURTHER **CHARACTERISED IN THAT** the air-heater means (2,9) is adjustable via a central processing unit (CPU) to bring the air temperature upstream of the drum (1) close to a predetermined control value to thereby minimise energy wastage as well as avoiding damage caused by the circulating air becoming too hot and hence being capable of causing damage to e.g. clothing that is circulating within the tumble dryer drum (1).

6. A tumble dryer according to any preceding claim FURTHER **CHARACTERISED IN THAT** the air circulation means includes a pair of gate flaps (12,13) and associated air inlet and air outlet ducts (14,15) operable by a CPU in response to the upstream temperature and the downstream temperature and pressure sensed indicating that a maximum saturation point of air within the drum has been reached, or after a given period of time has elapsed.

7. A tumble dryer according to claim 6 FURTHER **CHARACTERISED IN THAT** the dryer includes a first fan (3) and first electric heater (2) adjacent the inlet end of the drum (1) and a second fan (8) and second electric heater (9) remote from the drum and immediately downstream of the pair of gate flaps (12,13) to thereby heat incoming ambient air as required or maintain the temperature within the duct and drum as required.

8. A method of drying clothes in a tumble dryer including the steps, in any suitable order, of providing air heater means (2,9) and air circulation means (3,8) to move air heated by the heater means through the interior of a drum (1) of the tumble dryer in a circuit and to selectively vent the air to ambient,
**characterized by** the further steps, in any suitable order, of sensing ambient air humidity and temperature, upstream of the drum providing air temperature sensor means (4), downstream of the drum providing air temperature and pressure sensor means (5), and providing means for using the upstream temperature and downstream temperature and pressure sensed to predict the saturation of the air exiting the tumble dryer drum to thereafter selectively switch from air recirculation to air venting mode when a preselected level of saturation has been reached.

## Patentansprüche

1. Wäschetrockner mit Luftheizmittel (2, 9), Luftzirkulationsmittel (3, 8) zum Bewegen von Luft, die mittels der Heizmittel durch das Innere einer Wäschetrocknertrommel (1) in einem kanalisierten Kreislauf (7) erhitzt wird, und Mittel (12, 13) zum selektiven Entlüften der Luft an die Umgebung, **gekennzeichnet durch** Mittel (16) zum Erfassen der Umgebungsluftfeuchtigkeit und -temperatur, stromaufwärts der Trommel angeordneter Lufttemperaturerfassungsmittel (4), stromabwärts der Trommel angeordneter Lufttemperatur- und Druckerfassungsmittel (5), und Mittel zum Verwenden der stromaufwärtigen Temperatur und stromabwärtigen Temperatur und Druck, die erfasst werden, um die Sättigung der Luft abzuschätzen, die aus der Wäschetrocknertrommel austritt, um danach selektiv von dem Luftrückführungs- in den Entlüftungsmodus umzuschalten, wenn ein vorgewählter Sättigungsgrad erreicht worden ist.

2. Wäschetrockner nach Anspruch 1, des Weiteren **dadurch gekennzeichnet, dass** die Luftdruckmessung unmittelbar stromabwärts der Wäschetrocknertrommel (1) über die Zeit gemittelt wird, um Schwankungen der Ablesewerte aufgrund von zum Beispiel feuchter oder nasser Kleidung innerhalb der Trommel zu vermeiden, die sich während ihrer Drehung verlagern und dadurch fehlerhafte Ablesewerte verursachen.

3. Wäschetrockner nach Anspruch 1 oder 2, des Weiteren **dadurch gekennzeichnet, dass** die Trommel thermisch isoliert (17) ist.

4. Wäschetrockner nach einem der vorhergehenden Ansprüche, des Weiteren **dadurch gekennzeichnet, dass** während des Trocknungszyklus, wenn im Luftrückführungsmodus die Luftheizleistung reduziert oder anderweitig eingestellt ist, so dass die Temperatur der Luft, die aus der Wäschetrocknertrommel (1) austritt, relativ konstant bleibt, um dadurch zu vermeiden, dass die Temperatur der Luft innerhalb der Trommel überhöhte Werte erreicht, wenn die Luft weniger mit Wasser gesättigt wird.

5. Wäschetrockner nach einem der vorhergehenden Ansprüche, des Weiteren **dadurch gekennzeichnet, dass** die Luftheizmittel (2, 9) über eine zentrale Verarbeitungseinheit (CPU) einstellbar sind, um die Lufttemperatur stromaufwärts der Trommel (1) nahe an einen vorgegebenen Steuerwert zu bringen, um dadurch Energieverlust zu minimieren sowie Schäden zu vermeiden, die dadurch verursacht werden, dass die zirkulierende Luft zu heiß wird und daher in der Lage ist, Schäden an zum Beispiel Kleidung zu verursachen, die in der Wäschetrocknertrommel (1) zirkuliert.

6. Wäschetrockner nach einem der vorhergehenden Ansprüche, des Weiteren **dadurch gekennzeichnet, dass** die Luftzirkulationsmittel ein Paar von Durchlassklappen (12, 13) und zugehörige Lufteinlass- und Luftauslasskanäle (14, 15) aufweist, die durch eine CPU in Reaktion auf die erfasste stromaufwärtige Temperatur und stromabwärtige Temperatur und Druck durchführbar ist, die anzeigen, dass ein maximaler Sättigungspunkt der Luft innerhalb der Trommel erreicht wurde, oder nachdem eine bestimmten Zeitspanne verstrichen ist.

7. Wäschetrockner nach einem der vorhergehenden Ansprüche, des Weiteren **dadurch gekennzeichnet, dass** der Trockner einen ersten Ventilator (3) und erste elektrisches Heizvorrichtung (2) neben dem Einlassende der Trommel (1) und einen zweiten Ventilator (8) und zweite elektrische Heizvorrichtung (9) entfernt von der Trommel und unmittelbar stromabwärts des Paares Durchlassklappen (12, 13) aufweist, um dadurch einströmende Umgebungsluft nach Bedarf zu erhitzen oder um die Temperatur innerhalb des Kanals und der Trommel nach Bedarf aufrechtzuerhalten.

8. Verfahren zum Trocknen von Kleidung in einem Wäschetrockner, mit den folgenden Schritten in jeder geeigneten Reihenfolge: Bereitstellen von Luftheizmittel (2, 9) und Luftzirkulationsmittel (3, 8) zum Bewegen von Luft, die mittels der Heizmittel durch das Innere einer Wäschetrocknertrommel (1) in einem Kreislauf erhitzt wird, und zum selektiven Entlüften der Luft an die Umgebung, **gekennzeichnet durch** die weiteren Schritte, in jeder geeigneten Reihenfolge: Erfassen der Umgebungsluftfeuchtigkeit und -temperatur, Bereitstellen von Trommellufttemperaturerfassungsmitteln (4) stromaufwärts, Bereitstellen von Trommellufttemperatur- und Druckerfassungsmitteln (5) stromabwärts, und Bereitstellen von Mitteln zum Verwenden der stromaufwärtigen Temperatur und stromabwärtigen Temperatur und Druck, die erfasst werden, um die Sättigung der Luft abzuschätzen, die aus der Wäschetrocknertrommel austritt, um danach selektiv von dem Luftrückführungs- in den Entlüftungsmodus umzuschalten, wenn ein vorgewählter Sättigungsgrad erreicht worden ist.

## Revendications

1. Séchoir par culbutage comprenant des moyens de chauffage d'air (2, 9), des moyens de circulation d'air (3, 8) pour déplacer l'air chauffé par les moyens de chauffage à l'intérieur d'un tambour (1) du séchoir par culbutage dans un circuit à conduit (7) et des moyens (12, 13) pour évacuer sélectivement l'air dans l'atmosphère ambiante, **caractérisé par** des moyens (16) pour détecter l'humidité et la température de l'air ambiant, en amont des moyens de capteur de température d'air de tambour (4), en aval des moyens de capteur de température et de pression d'air de tambour (5), et des moyens pour utiliser la température en amont et la pression et la température en aval détectées pour prévoir la saturation de l'air sortant du tambour du séchoir par culbutage pour passer ensuite sélectivement du mode de recirculation d'air au mode d'évacuation d'air lorsqu'un niveau de saturation présélectionné a été atteint.

2. Séchoir par culbutage selon la revendication 1, **caractérisé en outre en ce que** la mesure de pression d'air immédiatement en aval du tambour (1) du séchoir par culbutage est calculée pour établir la moyenne avec le temps afin d'empêcher des fluctuations dans les lectures à cause par exemple des vêtements humides ou mouillés à l'intérieur du tambour qui se déplacent pendant sa rotation et provoquant ainsi des lectures erronées.

3. Séchoir par culbutage selon la revendication 1 ou la revendication 2, **caractérisé en outre en ce que** le tambour est thermiquement isolé (17).

4. Séchoir par culbutage selon l'une quelconque des revendications précédentes, **caractérisé en outre en ce que** pendant le cycle de séchage lorsqu'il est en mode de recirculation d'air, la puissance de chauffage d'air est réduite ou bien ajustée de sorte que la température de l'air sortant du tambour (1) du séchoir par culbutage reste relativement constante, évitant ainsi à la température de l'air à l'intérieur du tambour d'atteindre des niveaux excessifs lorsque l'air est moins saturé en eau.

5. Séchoir par culbutage selon l'une quelconque des revendications précédentes, **caractérisé en outre en ce que** les moyens de chauffage d'air (2, 9) sont ajustables via une unité de traitement centrale (CPU) pour amener la température de l'air en amont du tambour (1) à proximité d'une valeur de commande prédéterminée pour minimiser ainsi le gaspillage énergétique ainsi que pour éviter l'endommagement provoqué par l'air de circulation qui devient trop chaud et par conséquent être capable d'endommager par exemple des vêtements qui circulent dans le tambour (1) du séchoir par culbutage.

6. Séchoir par culbutage selon l'une quelconque des revendications précédentes, **caractérisé en outre en ce que** les moyens de circulation d'air comprennent une paire de volets rabattables (12, 13) et des conduits d'entrée et de sortie d'air associés (14, 15) pouvant fonctionner grâce à une CPU en réponse à la température en amont et à la température et à la pression en aval détectées, indiquant qu'un point de saturation d'air maximum à l'intérieur du tambour a été atteint, ou après qu'une période de temps donnée s'est écoulé.

7. Séchoir par culbutage selon la revendication 6, **caractérisé en outre en ce que** le séchoir comprend un premier ventilateur (3) et un premier dispositif de chauffage électrique (2) adjacent à l'extrémité d'entrée du tambour (1) et un second ventilateur (8) et un second dispositif de chauffage électrique (9) à distance du tambour et immédiatement en aval de la paire de volets rabattables (12, 13) pour chauffer ainsi l'air ambiant entrant si nécessaire ou maintenir la température à l'intérieur du conduit et du tambour, si nécessaire.

8. Procédé pour sécher des vêtements dans un séchoir par culbutage comprenant les étapes suivantes, dans n'importe quel ordre approprié : prévoir des moyens de chauffage d'air (2, 9) et des moyens de circulation d'air (3, 8) pour déplacer l'air chauffé par les moyens de chauffage à l'intérieur d'un tambour (1) du séchoir par culbutage dans un circuit et pour évacuer sélectivement l'air dans l'atmosphère ambiante,
**caractérisé par** les étapes supplémentaires suivantes, dans n'importe quel ordre approprié : détecter l'humidité et la température de l'air ambiant, en amont du tambour, prévoir des moyens de capteur de température d'air (4), en aval du tambour, prévoir des moyens de capteur de température et de pression d'air (5), et prévoir des moyens pour utiliser la température en amont et la température et la pression en aval détectées pour prévoir la saturation de l'air sortant du tambour du séchoir par culbutage pour passer sélectivement ensuite du mode de recirculation d'air au mode d'évacuation d'air lorsqu'un niveau de saturation présélectionné a été atteint.
